# FASCICULE DE BREVET EUROPEEN

(11) **EP 0 779 867 B1**
(45) Date de publication et mention de la délivrance du brevet: **16.12.1998**
(21) Numéro de dépôt: 95927789.8
(22) Date de dépôt: 17.08.1995
(51) Int. Cl.: B60T 8/36, G05D 16/20

(54) **ELECTROVALVE DE REGULATION DE PRESSION POUR CIRCUIT HYDRAULIQUE**
ELEKTRISCHES DRUCKREGELVENTIL FÜR HYDRAULISCHEN KREISLAUF
PRESSURE REGULATING SOLENOID VALVE FOR HYDRAULIC CIRCUITS

(30) Priorité: 08.09.1994 FR 9410730
(43) Date de publication de la demande: 25.06.1997
(73) Titulaire: Bosch Systemes de Freinage, 93700 Drancy (FR)
(72) Inventeur: KERVAGORET, Gilbert, F-95100 Argenteuil (FR); CHERON, Jean Marc, F-77230 Longperrier (FR); BOURLON, Philippe, F-93300 Aubervilliers (FR)
(74) Mandataire: Bentz, Jean-Paul
(86) Numéro de dépôt international: FR9501087
(87) Numéro de publication internationale: WO9607570

(56) Documents cités:
- WO-A-93/09485
- DE-A- 3 810 581
- DE-A- 4 023 660
- FR-A- 2 618 204
- US-A- 4 917 150

## Description

La présente invention concerne les électrovalves de régulation de pression pour circuits hydrauliques, plus particulièrement mais non exclusivement destinées aux circuits de freinage des véhicules automobiles, dotés d'un système d'antiblocage des roues au freinage.

Les systèmes actuels d'antiblocage des roues mettent en oeuvre, entre une source de fluide sous pression et un récepteur de pression tel qu'un moteur de frein, une électrovalve commandée par un calculateur en fonction de signaux représentatifs de la vitesse de rotation des roues pour, de façon générale, détendre la pression du fluide dans le moteur de frein lorsque le calculateur détecte l'imminence du blocage de la roue associée à ce moteur de frein, puis connecter une deuxième source de fluide sous pression pour augmenter à nouveau la pression hydraulique dans le moteur de frein, jusqu'à ce qu'un nouveau blocage soit détecté comme imminent, les cycles de détente et de remontée en pression se renouvelant alors.

Les électrovalves utilisées fonctionnent la plupart du temps en tout ou rien, une électrovalve étant utilisée pour détendre la pression dans le moteur de frein, et une autre pour la remontée en pression dans ce moteur de frein, et ce pour chaque roue du véhicule.

Ces phases successives de détente et de remontée en pression durent chacune un temps très court et se succèdent rapidement, d'où il en résulte que les électrovalves changent de nombreuses fois d'état rapidement. Ceci provoque un bruit important dû au battement de la partie mobile de ces électrovalves, accompagné par des à-coups de pression dans les moteurs de frein, engendrant des régimes transitoires mal contrôlés.

Pour éviter ces inconvénients, on a proposé depuis, par exemple dans les documents FR-A-2 679 299 ou FR-A-2 683 338, d'utiliser des électrovalves à trois voies, de type proportionnelles. Elles permettent d'une part de n'utiliser qu'une seule électrovalve par roue du véhicule à commander, et d'autre part elles ont un fonctionnement beaucoup plus silencieux.

De telles électrovalves proportionnelles ont toutefois encore l'inconvénient de présenter un encombrement important. En effet, ces électrovalves sont la plupart du temps constituées d'une partie purement électrique incluant le bobinage électrique, les pièces polaires et un noyau magnétique mobile, et une partie purement hydraulique incluant un tiroir distributeur coulissant dans un alésage ou une chemise formés dans un corps comportant différents conduits hydrauliques, la liaison entre ces deux parties étant effectuée par un poussoir solidaire du noyau magnétique mobile sur lequel vient en appui le tiroir distributeur.

Une telle disposition en ligne des parties électrique et hydraulique confère aux électrovalves connues des dimensions longitudinales qui peuvent rendre difficile, ou même impossible leur implantation dans les cas où la place qui leur est dévolue est par trop limitée.

La présente invention a donc pour objet de proposer une électrovalve de régulation de pression qui présente un encombrement réduit, et ceci sans augmenter ni les difficultés de fabrication ni par conséquent le coût, et dont le fonctionnement soit fiable en toutes circonstances.

Dans ce but, l'invention propose une électrovalve de régulation de pression pour un circuit hydraulique comprenant au moins un générateur de fluide sous pression, un récepteur de pression et un réservoir de fluide sous basse pression, l'électrovalve comportant un bobinage électrique coopérant avec deux pièces polaires, un corps magnétique mobile sous l'effet d'une force d'actionnement engendrée par un champ magnétique créé par le bobinage électrique, et un élément distributeur coopérant avec une structure de chemise pour commander la communication entre un conduit relié au récepteur de pression et l'un ou l'autre de conduits reliés au générateur de fluide sous pression et au réservoir de fluide sous basse pression, l'électrovalve comportant au moins une chambre de réaction communiquant en permanence avec le récepteur de pression et déterminant une force de réaction s'ajoutant à la force d'actionnement engendrée par le bobinage, à l'encontre de la force engendrée par un moyen élastique précontraint sur le corps magnétique mobile, la structure de chemise de l'électrovalve étant constituée par le corps magnétique mobile et coulissant autour de l'élément distributeur, ce dernier étant fixé.

Une telle électrovalve de régulation de pression est par exemple connue du document DE-A-4 023 660.

Selon la présente invention, la pression dans la chambre de réaction est en permanence égale à la pression régnant dans le récepteur de pression.

L'invention sera mieux comprise, et d'autres buts, caractéristiques et avantages de celle-ci apparaîtront plus clairement à la lecture de la description qui suit d'un mode de réalisation préféré, donné à titre d'exemple non limitatif et en référence aux dessins annexés sur lesquels :
- La Figure 1 représente schématiquement en coupe un mode de réalisation d'une électrovalve conforme à la présente invention, et
- la Figure 2 représente schématiquement en coupe une variante du mode de réalisation de l'électrovalve de la Figure 1.

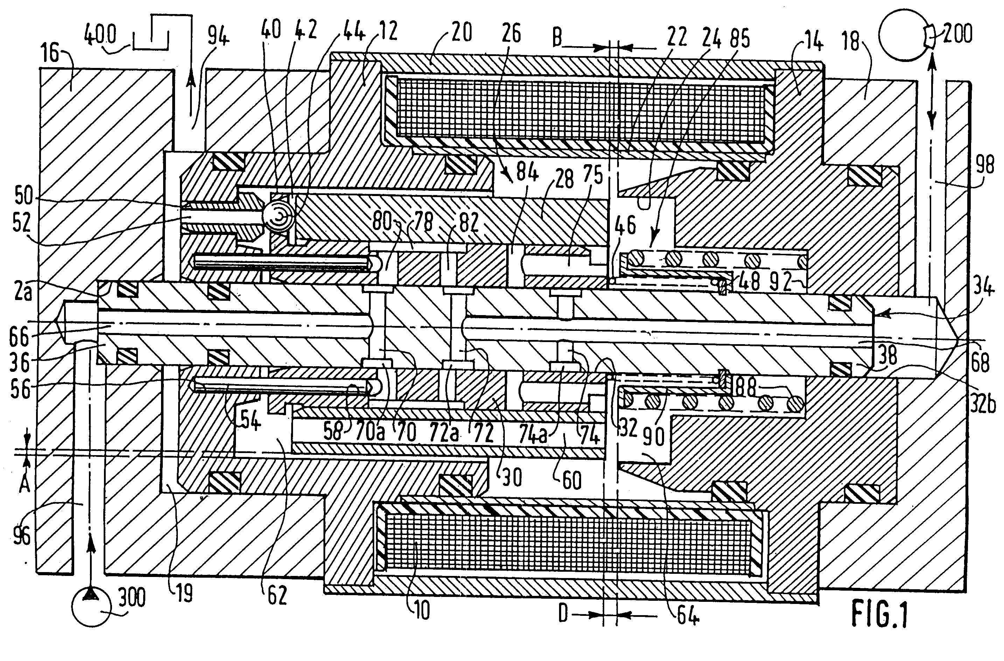

L'électrovalve représentée sur la Figure 1, et désignée dans son ensemble par la référence 100, est destinée à être insérée dans un circuit hydraulique pour moduler la pression dans un récepteur de pression 200 en reliant ce dernier soit à générateur de fluide sous pression 300, soit à un réservoir de fluide sous basse pression 400, sous la commande d'un calculateur ou d'un microprocesseur (non représentés).

L'électrovalve 100 comporte un bobinage électrique 10 susceptible de faire circuler un flux magnétique dans deux pièces polaires 12 et 14 maintenues entre deux flasques d'extrémité 16 et 18 respectivement avec interposition de joints d'étanchéité entre chaque pièce polaire et le flasque associé, un espace 19 étant ménagé axialement entre la pièce polaire 12 et le flasque 16. Le bobinage 10 est situé dans un volume délimité extérieurement par une carcasse cylindrique en matériau magnétique 20 et intérieurement par un manchon cylindrique en matériau amagnétique 22, des joints assurant l'étanchéité entre le manchon 22 et chacune des pièces polaires 12 et 14.

Ainsi assemblées, les pièces polaires 12 et 14 définissent un alésage interne commun 24 dans lequel coulisse un corps magnétique 26, qui sera décrit plus en détail par la suite, et qui est soumis au flux magnétique circulant dans les pièces polaires 12 et 14 et dans la carcasse 20 de façon à former un circuit magnétique pratiquement ferme.

La pièce polaire 14 est conformée de façon à ce que l'électrovalve 100 ait un fonctionnement du type proportionnel. De façon plus précise, on sait que le bobinage des électrovalves de ce type présente la caractéristique essentielle de pouvoir fournir un effort sensiblement constant pour un courant déterminé dans une plage de déplacement appréciable du corps magnétique 26, de l'ordre de plusieurs millimétres. Cette caractéristique est mise à profit dans la présente invention pour assurer la fonction recherchée de modulation de pression par la modulation du courant électrique circulant dans le bobinage 10.

Une électrovalve de ce type présente alors l'avantage de pouvoir être commandée en faisant simplement varier le courant circulant dans le bobinage sans faire battre la partie mobile, et sans provoquer d'à-coups de pression dans les récepteurs de pression. De plus, une telle électrovalve peut facilement être commandée par un microprocesseur assurant par exemple un découpage d'un courant continu à une fréquence variable, ou à une fréquence fixe et avec un rapport cyclique variable.

Le corps magnétique 26 est en réalité composite, et constitué d'un manchon 28, par exemple en acier doux ou très doux, pour constituer la partie magnétique active du corps magnétique 26, et entourant un noyau creux 30, par exemple en fonte ou en acier traité. Le manchon 28 et le noyau 30 sont solidaires l'un de l'autre, par exemple par emmanchement à force ou par frettage. Le noyau 30 est lui-même formé avec un alésage axial 32 de façon à coulisser sur un axe central 34.

Une première extrémité 36 de l'axe central 34 est immobilisée de façon étanche dans le flasque 16, tandis que l'autre extrémité 38 est reçue également de façon étanche dans la pièce polaire 14. Pour faciliter la réalisation de l'électrovalve, le flasque 16 et la pièce polaire 14 peuvent être formés tous deux avec un alésage 32a et 32b respectivement, de même axe et de même diamètre que l'alésage 32.

Le noyau 30 est formé à son extrémité tournée vers le flasque 16 avec une extension radiale 40 située à distance de la face correspondante du manchon 28 et percée axialement d'un alésage conique pour former dans le corps 26 un logement 42 pour une bille 44, prisonnière dans ce logement mais pourvue d'une certaine latitude de mouvement axial dans ce logement 42.

Le noyau 30, et donc le corps 26, est sollicité vers la pièce polaire 12 et le flasque 16 par un ressort de compression 46 en appui sur une collerette ou un circlips 48 solidaire de l'axe central 34, vers une position de repos dans laquelle la bille 44 vient en butée sur une pièce 50, frettée ou montée à force dans la pièce polaire 12 et pourvue d'un passage axial 52. Dans cette position de repos, la bille 44 vient donc obstruer le passage 52 entre l'intérieur de l'alésage 24 et l'espace 19, et forme donc un clapet à bille pour permettre ou interdire la communication avec le réservoir 400

Pour assurer l'alignement axial de la bille 44 et de son siège 50, et ainsi garantir leur parfaite coopération axiale, le corps 26 est immobilisé en rotation autour de l'axe central 34 par au moins une (deux dans le mode de réalisation représenté) aiguille 54 disposée dans un alésage borgne 56 de la pièce polaire 12, et reçue à coulissement quasi-étanche dans un alésage 58 du corps 26, formé par exemple dans le noyau 30. De façon à tenir compte des tolérances de fabrication des divers composants et des légers défauts d'alignement qui peuvent en résulter, on pourra prévoir que l'aiguille 54 ait un léger jeu radial dans l'alésage 56.

Le manchon 28 est muni d'un passage axial 60 pour mettre en communication permanente les espaces 62 et 64 situés de part et d'autre du corps 26 dans l'alésage 24.

L'axe central 34 est muni de deux perçages axiaux borgnes 66 et 68, débouchant chacun dans un perçage radial 70 et 72 respectivement de l'axe central 34, un troisième perçage radial 74 étant formé dans l'axe 34 pour communiquer avec le perçage axial 68, qui débouche par ailleurs dans l'alésage 32b. Chaque perçage radial 70, 72 et 74 débouche diamétralement dans une gorge circulaire 70a, 72a et 74a respectivement formée sur la surface extérieure de l'axe central 34.

Le noyau 30 comporte des perçages radiaux 80, 82 et 84. Les perçages 80 et 82 débouchent dans une gorge circulaire 78 formée sur la surface extérieure du noyau 30, au moins autant de perçages 80 étant réalisés qu'il y a d'aiguilles 54 de sorte que le ou las alésages axiaux 58 débouchent dans ce ou ces perçages radiaux 80. Des perçages axiaux 75 débouchent dans les perçages radiaux 84 et les mettent en communication avec l'espace 64 dans l'alésage 24.

Un dispositif de boite à ressort, désigné dans son ensemble par la référence 85, est disposé sur l'axe central 34, et comporte un ressort 88 précontraint entre d'une part une coupelle 90 en butée, au repos, sur la collerette 48, et d'autre part un épaulement 92 de la pièce polaire 14 entre les alésages 32b et 24 de celle-ci, de telle sorte qu'une distance axiale D soit ménagée au repos entre les extrémités en regard de la coupelle 90 et du corps magnétique 26.

Enfin, le flasque 16 comporte un passage 94 pour pouvoir faire communiquer l'espace 19 avec le réservoir de fluide sous basse pression 400, et un passage 96 pour pouvoir faire communiquer le perçage axial 66 avec le générateur de fluide sous pression 300, et le flasque 18 comporte un passage 98 pour pouvoir faire communiquer le perçage axial 68 et l'intérieur de l'alésage 32b avec le récepteur de pression 200.

L'électrovalve dont la structure vient d'être décrite fonctionne de la manière suivante.

Au repos, c'est à dire en l'absence de courant électrique circulant dans le bobinage 10, les différents éléments composant l'électrovalve occupent la position représentée sur la Figure 1. En particulier, sous l'action du ressort 46 en appui sur le corps 26, ce dernier maintient la bille en appui sur son siège 50 et interdit la communication entre l'espace 62 et le passage 94 vers le réservoir 400.

Le fluide sous pression fourni par le générateur 300 parvient au récepteur de pression 200, un moteur de frein dans l'application préférée de l'invention, par le passage 96, les perçages 66, 70 et 80, la gorge 78, les perçages 82, 72 et 68 et le passage 98, pour assurer le freinage du véhicule.

Lorsque le calculateur détecte, au moyen de capteurs de vitesse de rotation des roues (non représentés), l'imminence du blocage de la roue associée au moteur de frein 200, il commande alors l'augmentation du courant dans le bobinage 10. Ce courant engendre, par l'intermédiaire des pièces polaires 12 et 14, une force sur le corps magnétique 26 qui se déplace à l'encontre de l'action du ressort 46, dont la précontrainte au repos peut être assez faible, mais suffisante toutefois pour garantir la fermeture du passage de valve 44-50.

Le corps magnétique se déplace donc d'une distance D jusqu'à ce qu'il vienne en appui sur la boite à ressort 85, qui présente alors une résistance à l'avancement égale à la précontrainte F₀ au repos du ressort 88. Le déplacement du corps magnétique 26 est de plus facilité par la présence du passage 60 entre les espaces 62 et 64, assurant l'égalité des pressions de part et d'autre du corps magnétique 26 dans toutes ses positions et dans toutes les phases de fonctionnement.

Au tout début de ce déplacement du corps magnétique, la bille 44 se trouve soulevée de son siège 50, mettant ainsi en communication le réservoir de fluide sous basse pression 400 avec les espaces 62 et 64 réunis par le passage 60.

La distance D est prédéterminée pour qu'elle corresponde sensiblement à une des limites de la plage de déplacement du corps magnétique 26, évoquée plus haut, et pour laquelle le fonctionnement de l'électrovalve est de type proportionnel. Autrement dit, les caractéristiques du bobinage 10 sont prédéterminées pour qu'à cet instant du fonctionnement, l'intensité I₀ du courant circulant dans le bobinage 10 engendre sur le corps magnétique 26 une force Φ₀ égale et de sens opposé à la force F₀. Pour toute valeur I de l'intensité du courant supérieure à I₀, le corps magnétique 26 sera soumis à une force Φ proportionnelle à la quantité (I-I₀).

Le corps magnétique 26 pourra alors comprimer la boite à ressort 85 d'une quantité d, en ayant à vaincre un effort résistant F, supérieur à F₀, et proportionnel à la valeur d de la compression de la boite à ressort 85. La raideur du ressort 88 sera alors prédéterminée pour réaliser l'équilibre des forces F et Φ sur le corps magnétique et obtenir ainsi un fonctionnement optimal de l'électrovalve.

Dans ces conditions, l'intensité du courant augmentant dans le bobinage 10, le corps magnétique 26 se déplace en comprimant la boite à ressort 85, de sorte que la communication entre le perçage 80 et la gorge 70a se trouve interrompue, de même que la fourniture de fluide sous pression au moteur de frein 200 par le générateur 300.

L'intensité du courant augmentant encore, un déplacement supplémentaire du corps magnétique amène le perçage 84 en communication avec la gorge 74a. Le moteur de frein 200 se trouve donc mis en communication avec le réservoir de fluide sous basse pression 400 par l'intermédiaire du perçage 75, l'espace 64, le passage 60, l'espace 62, et le passage de valve 44-50 qui est alors ouvert.

La pression dans le moteur de frein 200 peut donc décroître, ce qui fait disparaître le risque de blocage de la roue associée au moteur de frein 200.

De plus, la gorge 72a de l'axe central 34 est dimensionnée pour que, dans toutes les positions du corps magnétique 26, elle communique avec le perçage 82. Il en résulte que le perçage 80 est en communication permanente avec le moteur de frein 200 par la gorge 78, les perçages 82, 72 et 68, et le passage 98. La pression qui s'exerce dans l'alésage 58 sur la section transversale de l'aiguille 54 est donc en permanence égale à la pression régnant dans le moteur de frein 200. Le perçage 80 constitue donc une chambre de réaction hydraulique, en coopération avec l'aiguille 54, coulissant de façon quasi-étanche dans son alésage 58.

Ceci a pour effet que le mouvement du corps magnétique 26, produit par le courant dans le bobinage 10, est favorisé par la réaction hydraulique dans la chambre de réaction 80 qui crée une force s'ajoutant à celle qui est créée par le bobinage 10, et opposée à celle qu'exerce la boite à ressort 85.

Lorsque l'intensité du courant augmente, la pression dans le moteur de frein décroît . Il en résulte que la force de réaction hydraulique due à la chambre de réaction 80 diminue également, jusqu'à ce que, additionnée à l'action due au bobinage 10, elle équilibre l'action du ressort 88.

Lorsque le calculateur détecte, dans cette phase de fonctionnement du système d'antiblocage, que la roue associée au moteur de frein 200 a acquis une vitesse de rotation trop im portante, il commande une diminution du courant circulant dans le bobinage 10. La force Φ devient alors inférieure à la force F, de sorte que l'action de la boite à ressort devient prépondérante et repousse le corps magnétique 26 en direction de sa position de repos initiale.

Dans ce mouvement, la communication entre le perçage 84 et la gorge 74a se trouve d'abord interrompue, de même que la communication du moteur de frein 200 avec le réservoir 400. Puis, l'intensité du courant diminuant encore, un déplacement supplémentaire du corps magnétique amène le perçage 80 en communication avec la gorge 70a. Le générateur 300 se trouve donc à nouveau mis en communication avec le moteur de frein 200, de sorte que la pression dans ce dernier croît à nouveau.

La pression dans la chambre de réaction 80 croît également, de sorte que la force de réaction hydraulique due à la chambre de réaction 80 augmente, s'opposant à l'action de la boite à ressort 85, en s'ajoutant à l'action due au bobinage 10.

Le processus qui vient d'être décrit se reproduit si la tendance de la roue au blocage persiste, et ce jusqu'à l'arrêt complet du véhicule ou jusqu'à ce que le conducteur du véhicule ait mis fin à l'action de freinage. Le calculateur interrompt alors l'excitation du bobinage 10, de sorte que le corps magnétique 26 retourne dans sa position de repos initiale, en étant sollicité d'abord par la boite à ressort 85, puis par le ressort 46, jusqu'à ce que le manchon 28 vienne mettre en butée la bille 44 sur son siège 50.

On comprend ainsi qu'en modulant de façon appropriée l'intensité du courant circulant dans le bobinage 10, le corps magnétique 26 prend une position qui est fonction de la pression régnant dans la chambre de réaction 80, et donc dans le moteur de frein 200. On pourra ainsi appliquer au moteur de frein 200 exactement la pression désirée, proportionnelle à l'intensité du courant circulant dans le bobinage 10.

On voit donc bien que l'on a réalisé une électrovalve dont l'encombrement est réduit dans une large mesure, grâce à la disposition du système de distribution de fluide à l'intérieur du bobinage d'électroaimant.

Ce système de distribution est constitué de l'axe central fixe 34, qui forme lui-même l'élément distributeur de l'électrovalve de l'invention, en coopération avec une structure de chemise mobile, formée par le corps magnétique composite 26 et composé du manchon 28 et du noyau creux 30.

Cette électrovalve présente par ailleurs de nombreux avantages. En effet, on a vu que le flasque 16 comporte à la fois le passage 94 de liaison avec le réservoir 400 et le passage 96 de liaison avec le générateur 300. La présence de ces deux passages dans le même flasque permet d'intégrer dans ce flasque 16 le générateur 300 lui-même, soutirant le fluide dont il a besoin dans le réservoir 400, ce qui permet de raccourcir et de simplifier les diverses connexions hydrauliques.

D'autre part, l'axe central 34 est fixe et assure la parfaite coaxialité des pièces polaires 12 et 14 et du corps magnétique 26 qui coulisse sur lui. Une telle conception permet de maîtriser très facilement et très précisément les jeux ou entrefers fonctionnels, tels que la distance radiale A entre la surface extérieure du manchon 28 et l'alésage 24, et la distance axiale B entre l'extrémité intérieure de la pièce polaire 14 et la surface terminale du corps magnétique 26.

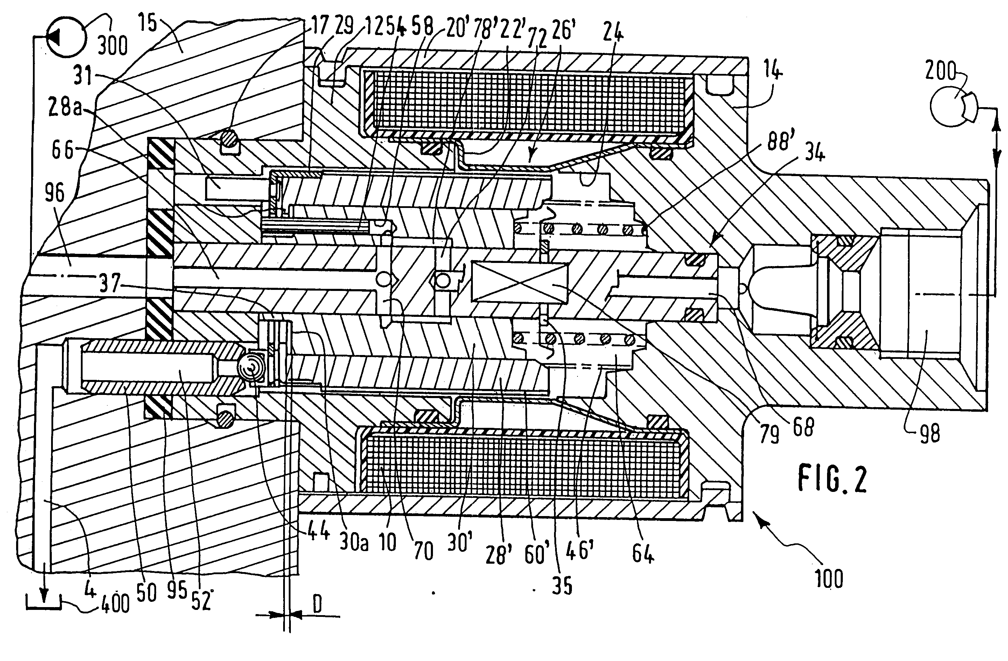

On a représenté sur la Figure 2 une variante de l'électrovalve qui vient d'être décrite.

Sur cette Figure, les éléments identiques ou équivalents à ceux de la Figure 1 sont identifiés par les mêmes signes de référence, éventuellement affectés d'un 〈〈 prime 〉〉.

On voit sur cette Figure 2 que les flasques d'extrémité ont été omis, le maintien des pièces polaires 12 et 14 étant assure par exemple par sertissage de la carcasse cylindrique 20' sur elles. L'axe central 34 est alors immobilisé de façon étanche dans les pièces polaires 12 et 14. L'électrovalve forme ainsi un ensemble compact, qu'on peut par exemple insérer dans un support 15, un jonc 17 assurant le maintien de l'électrovalve dans le support 15. On pourra alors avantageusement utiliser un joint plan 95, formé avec les ouvertures adéquates, pour assurer l'étanchéité entre les différents conduits à la transition support 15/électrovalve 100.

On peut d'autre part donner au manchon 22, comme on la représenté, une forme complémentaire de celle des pièces polaires 12 et 14, une telle forme permettant de diminuer la quantité de fluide et de faciliter les opérations de purge.

Selon cette variante de réalisation, le corps magnétique composite 26' est constitué d'un manchon 28' susceptible de coulisser autour d'un noyau creux 30'. Le manchon 28' est solidaire à son extrémité tournée vers la pièce polaire 12 d'un support 29 pour une cage 42' à bille 44, et il est immobilisé en rotation par un pion 31 solidaire du support 29 et pénétrant dans un perçage de la pièce polaire 12.

Le manchon 28' est sollicité vers la pièce polaire 12 par un ressort de compression 46' en appui sur la pièce polaire 14, vers une position de repos dans laquelle la bille 44 vient en butée sur la pièce 50 pour obstruer le passage 52.

L'aiguille 54 est fixe par rapport à la pièce polaire 12, et elle est reçue à coulissement quasi-étanche dans l'alésage borgne 58 du noyau creux 30'. Elle peut être, comme on l'a représenté, simplement en appui sur la pièce polaire 12. Elle pourrait également être disposée dans un alésage borgne de la pièce polaire 12. Les espaces situés de part et d'autre du corps magnétique 26' communiquent en permanence grâce à des rainures axiales 60' pratiquées à la périphérie extérieure du manchon 28'.

Le fonctionnement de l'électrovalve de la Figure 2 est pratiquement identique à celui qui à été décrit en relation avec la Figure 1.

Au repos, les différents éléments occupent la position représentée sur la Figure 2. En particulier, sous l'action du ressort 46' en appui sur le manchon 28', ce dernier maintient la bille en appui sur son siège et interdit la communication avec le réservoir 400.

Le fluide sous pression fourni par le générateur 300 parvient au moteur de frein 200 par le passage 96, les perçages 66 et 70, la gorge annulaire 78' formée à la périphérie intérieure du noyau creux 30', les perçages 72 et 68 et le passage 98, pour assurer le freinage du véhicule.

Lorsque le calculateur commande l'augmentation du courant dans le bobinage 10, ce courant engendre une force sur le manchon 28' qui se déplace à l'encontre de l'action du ressort 46'.

Le manchon 28' se déplace alors de la distance D, prédéterminée comme on l'a vu plus haut, jusqu'à ce qu'il vienne en appui sur le noyau creux 30', qui présente alors une résistance à l'avancement égale à la précontrainte F₀ au repos du ressort 88' en appui sur la pièce polaire 14. La distance D est ménagée entre des parties en regard du noyau creux 30' et du manchon 28', par exemple entre un épaulement radial 30a du noyau creux 30' et des pattes radiales 28a du manchon 28'.

Au tout début de ce déplacement du manchon 28', la bille 44 se trouve soulevée de son siège 50, mettant ainsi en communication le réservoir de fluide sous basse pression 400 avec les espaces situés de part et d'autre du corps magnétique 26'.

Le noyau creux 30' se déplace alors en comprimant le ressort 88', de sorte que la communication entre le perçage 70 et la gorge 78' se trouve interrompue, de même que la fourniture de fluide sous pression au moteur de frein 200 par le générateur 300.

L'intensité du courant augmentant encore, un déplacement supplémentaire du noyau creux 30' amène la gorge annulaire 78' en communication avec un méplat 79 formé sur la périphérie extérieure de l'axe central 34. Le moteur de frein 200 se trouve donc mis en communication avec le réservoir de fluide sous basse pression 400 par l'intermédiaire des perçages 68 et 72, la gorge 78', l'espace entre le méplat 79 et la surface interne du noyau creux 30', l'espace 64, les rainures 60', et le passage de valve 44-50 qui est alors ouvert. La pression dans le moteur de frein 200 peut alors décroître.

On pourra avantageusement former sur l'axe central 34, à l'aide d'un jonc ou d'un circlips 35, une butée limitant le mouvement du noyau creux 30' vers la pièce polaire 14, pour éviter que le noyau creux ne dépasse le méplat 79 et vienne refermer la communication avec le réservoir 400.

Comme dans le mode de réalisation précédent, la gorge 78' du noyau creux 30' est dimensionnée pour que, dans toutes les positions de ce dernier, elle communique avec le perçage 72, pour que l'alésage 58 soit en communication permanente avec le moteur de frein 200 par la gorge 78' et les perçages 72 et 68. La pression qui s'exerce dans l'alésage 58 sur la section transversale de l'aiguille 54 est donc en permanence égale à la pression régnant dans le moteur de frein 200. L'alésage 58 constitue donc une chambre de réaction hydraulique, en coopération avec l'aiguille 54, coulissant de façon quasi-étanche dans cet alésage 58.

Comme on l'a vu plus haut, lorsque l'intensité du courant augmente, la pression dans le moteur de frein décroît. Il en résulte que la force de réaction hydraulique due à la chambre de réaction 58 diminue également, jusqu'à ce que, additionnée à l'action due au bobinage 10, elle équilibre l'action du ressort 88.

Lorsque le calculateur commande une diminution du courant circulant dans le bobinage 10, la force Φ devient inférieure à la force F, de sorte que l'action du ressort 88' devient prépondérante et repousse le noyau creux 30' et le corps magnétique 28' sur lequel il est en appui en direction de leur position de repos initiale.

Dans ce mouvement, la communication entre le méplat 79 et la gorge 78' se trouve d'abord interrompue, de même que la communication du moteur de frein 200 avec le réservoir 400. Puis, l'intensité du courant diminuant encore, un déplacement supplémentaire du noyau creux 30' amène la gorge 78' en communication avec le perçage 70. Le générateur 300 se trouve donc à nouveau mis en communication avec le moteur de frein 200, de sorte que la pression dans ce dernier croît à nouveau.

La pression dans la chambre de réaction 58 croît également, de sorte que la force de réaction hydraulique due à la chambre de réaction 58 augmente, s'opposant à l'action du ressort 88', en s'ajoutant à l'action due au bobinage 10.

Lorsque le calculateur interrompt l'excitation du bobinage 10, le corps magnétique 26' retourne dans sa position de repos initiale, le noyau creux 30' étant d'abord sollicité par le ressort 88' jusqu'à ce qu'il vienne en butée sur la pièce polaire 12 par l'intermédiaire de pattes 37, puis le manchon 28' étant sollicité par le ressort 46' jusqu'à ce qu'il vienne mettre en butée la bille 44 sur son siège 50.

Comme on l'a vu plus haut, en modulant l'intensité du courant circulant dans le bobinage 10, le noyau creux 30' prend une position qui est fonction de la pression régnant dans la chambre de réaction 58, et donc dans le moteur de frein 200. On pourra ainsi appliquer au moteur de frein 200 exactement la pression désirée, proportionnelle à l'intensité du courant circulant dans le bobinage 10.

On a donc bien là encore réalisé une électrovalve dont l'encombrement est réduit dans une large mesure, grâce à la disposition du système de distribution de fluide à l'intérieur du bobinage d'électroaimant, le système de distribution étant constitué de l'axe central fixe 34, qui forme lui-même l'élément distributeur de l'électrovalve de l'invention, en coopération avec une structure de chemise mobile, formée par le corps magnétique composite 26' et composé du manchon 28' et du noyau creux 30'.

Cette électrovalve présente les mêmes avantages que ceux de l'électrovalve de la Figure 1 en ce qui concerne la simplification des connexions hydrauliques et la maîtrise des jeux ou entrefers fonctionnels. De plus, elle peut être facilement enfichée dans le support 15, ce qui simplifie également les opérations d'installation initiale et de maintenance. Une telle conception pourra bien sûr être adaptée sur l'électrovalve de la Figure 1.

Bien entendu, l'invention n'est pas limitée au mode de réalisation qui a été décrit, mais elle est susceptible au contraire de recevoir de nombreuses modifications qui apparaîtront à l'homme du métier et qui rentrent dans le cadre des revendications annexées.

## Revendications

1. Electrovalve (100) de régulation de pression pour un circuit hydraulique comprenant au moins un générateur de fluide sous pression (300), un récepteur de pression (200) et un réservoir de fluide sous basse pression (400), l'électrovalve (100) comportant un bobinage électrique (10) coopérant avec deux pièces polaires (12,14), un corps magnétique (26,26') mobile sous l'effet d'une force d'actionnement (Φ) engendrée par un champ magnétique créé par le bobinage électrique (10), et un élément distributeur (34) coopérant avec une structure de chemise (28,30;28',30') pour commander la communication entre un conduit (98) relié au récepteur de pression (200) et l'un (96) ou l'autre (94) de conduits reliés au générateur de fluide sous pression (300) et au réservoir de fluide sous basse pression (400), l'électrovalve (100) comportant au moins une chambre de réaction (58,80) communiquant en permanence avec le récepteur de pression (200) et déterminant une force de réaction s'ajoutant à la force d'actionnement (Φ) engendrée par le bobinage (10), à l'encontre de la force (F) engendrée par un moyen élastique précontraint (46,85;46',88') sur le corps magnétique mobile (26,26'), la structure de chemise (28,30;28',30') étant constituée par le corps magnétique mobile (26;26'), et coulissant autour de l'élément distributeur (34), ce dernier étant fixe, caractérisée en ce que la pression dans la chambre de réaction (58, 80) est en permanence égale à la pression régnant dans le récepteur de pression (200).

2. Electrovalve de régulation de pression selon la revendication 1, caractérisée en ce que la structure de chemise (28,30) comporte un manchon (28) solidaire d'un noyau creux (30), le manchon (28) constituant la partie magnétique active du corps magnétique (26).

3. Electrovalve de régulation de pression selon la revendication 1, caractérisée en ce que la structure de chemise (28,30) comporte un logement (42) retenant prisonnière une bille (44) coopérant avec un siège (50) formé sur une pièce polaire (12) pour contrôler la communication entre l'électrovalve (100) et le réservoir (400).

4. Electrovalve de régulation de pression selon la revendication 3, caractérisée en ce que la chambre de réaction (80) est formée dans la structure de chemise (28,30).

5. Electrovalve de régulation de pression selon la revendication 4, caractérisée en ce que la chambre de réaction (80) est délimitée par un perçage radial (80) dans le noyau creux (30) et par la section transversale d'une aiguille (54) coulissant dans un alésage axial (58) de la structure de chemise (28,30) et reçue dans un alésage axial (56) d'une (12) des pièces polaires.

6. Electrovalve de régulation de pression selon la revendication 1, caractérisée en ce que le moyen élastique précontraint (85) est formé par une boîte à ressort (85).

7. Electrovalve de régulation de pression selon la revendication 6, caractérisée en ce que la boite à ressort (85) comporte un ressort (88) précontraint entre une (14) des pièces polaires et une coupelle (90) en appui sur l'élément distributeur (34).

8. Electrovalve de régulation de pression selon la revendication 7, caractérisée en ce que, au repos, une distance axiale (D) est ménagée entre les extrémités en regard de la coupelle (90) et de la structure de chemise (28,30).

9. Electrovalve de régulation de pression selon la revendication 1, caractérisée en ce que la structure de chemise (28',30') comporte un manchon (28') susceptible de coulisser autour d'un noyau creux (30'), le manchon (28') constituant la partie magnétique active du corps magnétique (26').

10. Electrovalve de régulation de pression selon la revendication 1, caractérisée en ce que le manchon (28') est solidaire d'une cage (42') à bille (44), la bille (44) coopérant avec un siège (50) formé sur une pièce polaire (12) pour contrôler la communication entre l'électrovalve (100) et le réservoir (400).

11. Electrovalve de régulation de pression selon la revendication 10, caractérisée en ce que la chambre de réaction (58) est formée dans le noyau creux (30').

12. Electrovalve de régulation de pression selon la revendication 11, caractérisée en ce que la chambre de réaction (58) est délimitée par un alésage axial (58) dans le noyau creux (30') et par la section transversale d'une aiguille (54) coulissant dans cet alésage (58) et fixe par rapport à l'une (12) des pièces polaires.

13. Electrovalve de régulation de pression selon la revendication 9, caractérisée en ce que le moyen élastique précontraint (88') est formé par un ressort (88') précontraint entre une (14) des pièces polaires et le noyau creux (30').

14. Electrovalve de régulation de pression selon la revendication 13, caractérise en ce que, au repos, une distance axiale (D) est ménagée entre des parties en regard (28a,30a) du manchon (28') et du noyau creux (30').

15. Electrovalve de régulation de pression selon l'une quelconque des revendications précédentes, caractérisée en ce que les pièces polaires (12,14) sont maintenues entre deux flasques (16,18), l'un (18) des flasques comportant un passage (98) vers le récepteur de pression (200), et l'autre flasque (16) comportant un passage (94) vers le réservoir de fluide sous basse pression (400) et un passage (96) vers le générateur de fluide sous pression (300).

16. Electrovalve de régulation de pression selon l'une quelconque des revendications 1 à 14, caractérisée en ce que les pièces polaires (12,14) sont maintenues par une carcasse (20') en matériau magnétique.

17. Electrovalve de régulation de pression selon l'une des revendications 1 à 14, caractérisée en ce qu'elle est insérée dans un support (15) et y est maintenue par un jonc (17).

18. Electrovalve de régulation de pression selon la revendication 17, caractérisée en ce qu'un joint plan (95) est disposé entre le support (15) et l'électrovalve.

## Claims

1. Pressure-regulating solenoid valve (100) for a hydraulic circuit comprising at least one generator (300) of pressurized fluid, a pressure receiver (200) and a reservoir (400) of fluid under low pressure, the solenoid valve (100) including an electrical coil (10) interacting with two pole pieces (12, 14), a magnetic body (26, 26') which can move under the effect of an actuating force (Φ) generated by a magnetic field created by the electrical coil (10), and a distributor element (34) interacting with a sleeve structure (28, 30; 28', 30') in order to command the communication between a duct (98) connected to the pressure receiver (200) and one (96) or other (94) of ducts connected to the generator (300) of pressurized fluid, and to the reservoir (400) of fluid under low pressure, the solenoid valve (100) including at least one reaction chamber (58, 80) permanently communicating with the pressure receiver (200) and determining a reaction force which is added to the actuating force (Φ) generated by the coil (10), counter to the force (F) generated by a preloaded elastic means (46, 85; 46', 88') on the movable magnetic body (26, 26'), the sleeve (28, 30; 28', 30') consisting of the movable magnetic body (26, 26') and sliding around the distributor element (34), the latter being stationary, characterized in that the pressure in the reaction chamber (58, 80) is permanently equal to the pressure prevailing in the pressure receiver (200).

2. Pressure-regulating solenoid valve according to Claim 1, characterized in that the sleeve structure (28, 30) includes a sleeve tube (28) integral with a hollow core (30), the sleeve tube (28) constituting the active magnetic part of the magnetic body (26).

3. Pressure-regulating solenoid valve according to Claim 1, characterized in that the sleeve structure (28, 30) includes a housing (42) holding captive a ball (44) interacting with a seat (50) formed on a pole piece (12) in order to control the communication between the solenoid valve (100) and the reservoir (400).

4. Pressure-regulating solenoid valve according to Claim 3, characterized in that the reaction chamber (80) is formed in the sleeve structure (28, 30) .

5. Pressure-regulating solenoid valve according to Claim 4, characterized in that the reaction chamber (80) is delimited by a radial drilling (80) in the hollow core (30) and by the transverse section of a pin (54) sliding in an axial bore (58) of the sleeve structure (28, 30) and received in an axial bore (56) of one (12) of the pole pieces.

6. Pressure-regulating solenoid valve according to Claim 1, characterized in that the preloaded elastic means (85) is formed by a spring box (85).

7. Pressure-regulating solenoid valve according to Claim 6, characterized in that the spring box (85) includes a spring (88) which is preloaded between one (14) of the pole pieces and a spring plate (90) bearing on the distributor element (34).

8. Pressure-regulating solenoid valve according to Claim 7, characterized in that, at rest, axial distance (D) is left between the facing ends of the spring plate (90) and of the sleeve structure (28, 30) .

9. Pressure-regulating solenoid valve according to Claim 1, characterized in that the sleeve structure (28', 30') includes a sleeve tube (28') capable of sliding around a hollow core (30'), the sleeve tube (28') constituting the active magnetic part of the magnetic body (26').

10. Pressure-regulating solenoid valve according to Claim 1, characterized in that the sleeve tube (28') is integral with a cage (42') with ball (44), the ball (44) interacting with a seat (50) formed on a pole piece (12) in order to control the communication between the solenoid valve (100) and the reservoir (400) .

11. Pressure-regulating solenoid valve according to Claim 10, characterized in that the reaction chamber (58) is formed in the hollow core (30') .

12. Pressure-regulating solenoid valve according to Claim 11, characterized in that the reaction chamber (58) is delimited by an axial bore (58) in the hollow core (30') and by the transverse section of a pin (54) sliding in this bore (58) and stationary with respect to one (12) of the pole pieces.

13. Pressure-regulating solenoid valve according to Claim 9, characterized in that the preloaded elastic means (88') is formed of a spring (88') which is preloaded between one (14) of the pole pieces and the hollow core (30') .

14. Pressure-regulating solenoid valve according to Claim 13, characterized in that, at rest, an axial distance (D) is left between the facing parts (28a, 30a) of the sleeve tube (28') and of the hollow core (30').

15. Pressure-regulating solenoid valve according to any one of the preceding claims, characterized in that the pole pieces (12, 14) are held between two flanges (16, 18), one (18) of the flanges including a passage (98) towards the pressure receiver (200), and the other flange (16) including a passage (94) towards the reservoir (400) of fluid under low pressure and a passage (96) towards the generator (300) of pressurized fluid.

16. Pressure-regulating solenoid valve according to any one of Claims 1 to 14, characterized in that the pole pieces (12, 14) are held by a casing (20') made of magnetic material.

17. Pressure-regulating solenoid valve according to one of Claims 1 to 14, characterized in that it is inserted into a support (15) and held there by a snap ring (17).

18. Pressure-regulating solenoid valve according to Claim 17, characterized in that a flat seal (95) is placed between the support (15) and the solenoid valve.

## Patentansprüche

1. Elektroventil (100) zum Regulieren des Drucks in einem Hydraulikkreis mit mindestens einem Druckfluidgenerator (300), einem Druckempfänger (200) und einem Niederdruck-Fluidvorratsbehälter (400), wobei das Elektroventil (100) eine elektrische Spule (10) umfaßt, die mit zwei Polschuhen (12, 14) zusammenwirkt, einen Magnetkörper (26, 26'), der unter dem Einfluß einer Betätigungskraft (Φ) beweglich ist, die von einem Magnetfeld hervorgerufen wird, das die elektrische Spule (10) erzeugt, und ein Verteilelement (34), das mit einer Doppelwandstruktur (28, 30; 28', 30') zusammenwirkt, um die Verbindung zwischen einem Kanal (98), der an den Druckempfänger (200) angeschlossen ist, und dem einen (96) oder dem anderen (94) von Kanälen, die an den Druckfluidgenerator (300) und an den Niederdruck-Fluidvorratsbehälter (400) angeschlossen sind, zu steuern, wobei das Elektroventil (100) mindestens eine Reaktionskammer (58, 80) besitzt, die ständig mit dem Druckempfänger (200) in Verbindung steht und eine Reaktionskraft bestimmt, die zu der durch die Spule (10) erzeugte Betätigungskraft (Φ) hinzukommt, entgegen der Kraft (F), die ein elastisches, vorgespanntes Mittel (46, 85; 46', 88') auf dem beweglichen Magnetkörper (26, 26') erzeugt, wobei die Doppelwandstruktur (28, 30; 28', 30') aus dem beweglichen Magnetkörper (26; 26') besteht und um das Verteilelement (34) verschiebbar ist, wobei dieses feststeht, dadurch gekennzeichnet, daß der Druck in der Reaktionskammer (58, 80) ständig gleich dem im Druckempfänger (200) herrschenden Druck ist.

2. Elektroventil zum Regulieren des Druck nach Anspruch 1, dadurch gekennzeichnet, daß die Doppelwandstruktur (28, 30) eine Muffe (28) umfaßt, die fest mit einem Hohlkern (30) verbunden ist, wobei die Muffe (28) den magnetisch aktiven Teil des Magnetkörpers (26) darstellt.

3. Elektroventil zum Regulieren des Drucks nach Anspruch 1, dadurch gekennzeichnet, daß die Doppelwandstruktur (28, 30) eine Aufnahme (42) umfaßt, die eine Kugel (44) fest gefangen hält, die mit einem Sitz (5o) zusammenwirkt, der auf einem Polschuh (12) ausgebildet ist, um die Verbindung zwischen dem Elektroventil (100) und dem Vorratsbehälter (400) zu überwachen.

4. Elektroventil zum Regulieren des Drucks nach Anspruch 3, dadurch gekennzeichnet, daß die Reaktionskammer (80) in der Doppelwandstruktur (28, 30) ausgebildet ist.

5. Elektroventil zum Regulieren des Drucks nach Anspruch 4, dadurch gekennzeichnet, daß die Reaktionskammer (80) durch eine radiale Bohrung (80) im Kohlkern (30) und den Querschnitt einer Nadel (54) abgegrenzt ist, die in einer axialen Bohrung (58) der Doppelwandstruktur (28, 30) gleitet und in einer axialen Bohrung (56) eines (12) der Polschuhe aufgenommen ist.

6. Elektroventil zum Regulieren des Drucks nach Anspruch 1, dadurch gekennzeichnet, daß das vorgespannte elastische Mittel (85) durch ein Federgehäuse (85) gebildet ist.

7. Elektroventil zum Regulieren des Drucks nach Anspruch 6, dadurch gekennzeichnet, daß das Federgehäuse (85) eine Feder (88) enthält, die zwischen einem (14) der Polschuhe und einem Federteller (90) vorgespannt ist, der an dem Verteilelement (34) anliegt.

8. Elektroventil zum Regulieren des Drucks nach Anspruch 7, dadurch gekennzeichnet, daß im Ruhezustand zwischen den Enden ein axialer Abstand (D) gegenüber dem Federteller (90) und der Doppelwandstruktur (28, 30) ein axialer Abstand (D) ausgebildet ist.

9. Elektroventil zum Regulieren des Drucks nach Anspruch 1, dadurch gekennzeichnet, daß die Doppelwandstruktur (28', 30') eine Muffe (28') umfaßt, die um den Hohlkern (30') verschiebbar ist, wobei die Muffe (28') den magnetisch aktiven Teil des Magnetkörpers (26') darstellt.

10. Elektroventil zum Regulieren des Drucks nach Anspruch 1, dadurch gekennzeichnet, daß die Muffe (28') fest mit einem Käfig (44) einer Kugel (42') verbunden ist, wobei die Kugel (44) mit einem Sitz (50) zusammenwirkt, der auf einem Polschuh (12) ausgebildet ist, um die Verbindung zwischen dem Elektroventil (100) und dem Vorratsbehälter (400) zu überwachen.

11. Elektroventil zum Regulieren des Drucks nach Anspruch 10, dadurch gekennzeichnet, daß die Reaktionskammer (58) in dem Hohlkern (30') ausgebildet ist.

12. Elektroventil zum Regulieren des Drucks nach Anspruch 11, dadurch gekennzeichnet, daß die Reaktionskammer (58) durch eine axiale Bohrung (58) im Hohlkern (30') und durch den Querschnitt einer Nadel (54) unterteilt ist, die in der Bohrung (58) gleitet und in bezug auf einen (12) der Polschuhe feststehend ist.

13. Elektroventil zum Regulieren des Drucks nach Anspruch 9, dadurch gekenzeichnet, daß das vorgespannte elastische Mittel (88') durch eine Feder (88') gebildet wird, die zwischen einem (14) der Polschuhe und dem Hohlkern (30') vorgespannt ist.

14. Elektroventil zum Regulieren des Drucks nach Anspruch 13, dadurch gekennzeichnet, daß im Ruhezustand zwischen den der Muffe (28') und dem Hohlkern (30') gegenüberliegenden Abschnitten (28a, 30a) ein axialer Abstand (D) ausgebildet ist.

15. Elektroventil zum Regulieren des Drucks nach einem der vorhergehenden Ansprüche, dadurch gekennzeichnet, daß die Polschuhe (12, 14) zwischen zwei Flanschen (16, 18) gehalten werden, wobei einer (18) der Flansche einen Durchgang (98) zum Druckempfänger (200) hat und der andere Flansch (16) einen Durchgang (94) zum Niederdruck-Vorratsbehälter (400) und einen Durchgang (96) zum Druckfluidgenerator (300).

16. Elektroventil zum Regulieren des Drucks nach einem der Ansprüche 1 bis 14, dadurch gekennzeichnet, daß die Polschuhe (12, 14) in einem Gehäuse (20') aus magnetischem Material untergebracht sind.

17. Elektroventil zum Regulieren des Drucks nach einem der Ansprüche 1 bis 14, dadurch gekennzeichnet, daß es in einen Träger (15) eingesetzt ist und dort von einem Bügel (17) gehalten wird.

18. Elektroventil zum Regulieren des Drucks nach Anspruch 17, dadurch gekennzeichnet, daß eine flache Dichtung (95) zwischen dem Träger (15) und dem Elektroventil angeordnet ist.
